# EUROPEAN PATENT APPLICATION

(11) **EP 4 682 504 A1**
(43) Date of publication of application: **21.01.2026**
(21) Application number: 25187370.9
(22) Date of filing: 03.07.2025
(51) Int. Cl.: G01N 3/10, G01N 3/54

(54) **COMPACT SLIDING RETORT FOR CLAMSHELL FURNACE WITH UNIAXIAL TEST RIG**

(30) Priority: 15.07.2024 US 202418772418
(71) Applicant: RTX Corporation, Farmington, CT 06032 (US)
(72) Inventor: Madar, Matthew D., Ansonia, 06401 (US); Gorneault, Allan R., Southington, 06489 (US)
(74) Representative: Schmitt-Nilson Schraud Waibel Wohlfrom Patentanwälte Partnerschaft mbB

(57) **Abstract**

A sliding retort including an outer section and complimentary inner section the outer section and the inner section overlap proximate a receiver end and an insert end, wherein the inner section insert fits into an outer section receiver so that an insert wall and a receiver wall overlap to form a gas tight barrier; and a retort cavity formed within the compact sliding retort responsive to the outer section and the inner section being coupled, wherein a first load rod orifice and a second load rod orifice are configured to receive a load train of a uniaxial test rig and a test specimen coupled within the load train, such that the test specimen is surrounded with a gas forming a predetermined non-standard atmosphere within the retort cavity, whereby the load train can move axially with the sliding retort and maintain the non-standard atmosphere.

## Description

The present disclosure is directed to the improved compact sliding retort for a clamshell furnace with a uniaxial test rig.

There is often a need to create an inert gas environment on uniaxial test rigs for a variety of applications and temperature ranges in materials testing. A uniaxial testing machine, also known as a universal testing machine (UTM), is used to perform a wide variety of mechanical tests by pushing in compression or pulling in tension. It can test tensile strength, compressive strength, flexural strength, hardness, and other material properties.

Oftentimes these non-standard atmospheres are created using one of two methods: large external chambers with heating or cooling elements contained inside or retorts captured within a larger heating device such as a clamshell furnace. Both methods have their strengths and weaknesses with external chambers good for creating better sealing interfaces and allowing a larger variety of dynamic test types, however they are expensive and not adaptable between test rigs.

Retorts provide greater flexibility since they are designed to fit a furnace that can be mounted to a larger variety of test rigs, however they often lack sufficient sealing interfaces to fully contain a non-standard environment for dynamic test types.

The main problem to solve is to create a chamber or retort that is cost effective and quick to manufacture while being adaptable to a variety of test rigs that can accommodate dynamic uniaxial testing. Some constraints that further complicate the design are the chamber or retort must allow access to the test article after every test run for removal/installation and any components inside the heat zone must be able to tolerate high temperatures.

In accordance with the present disclosure, there is provided a sliding retort comprising an outer section comprising a receiver wall forming an outer section receiver at a receiver end, the outer section includes a first load rod orifice at an upper load rod receiving end opposite the receiver end; an inner section comprising an insert wall forming an inner section insert at an insert end, the inner section includes a second load rod orifice at a lower load rod receiving end opposite the insert end; the outer section and the inner section overlap proximate the receiver end and the insert end, wherein the inner section insert fits into the outer section receiver so that the insert wall and the receiver wall overlap to form a gas tight barrier; and a retort cavity formed within the compact sliding retort responsive to the outer section and the inner section being coupled, wherein the first load rod orifice and the second load rod orifice are configured to receive a load train of a uniaxial test rig and a test specimen coupled within the load train, whereby the load train can move axially with the sliding retort and maintain the non-standard atmosphere.

Particular embodiments further may include at least one, or a plurality of, the following optional features, alone or in combination with each other:

A further embodiment of any of the foregoing embodiments may additionally and/or alternatively include the sliding retort further comprising an upper spanner nut coupled with a split washer in operative communication with the first load rod orifice at an upper load rod receiving end; and a lower spanner nut coupled with another split washer in operative communication with the second load rod orifice at a lower load rod receiving end.

A further embodiment of any of the foregoing embodiments may additionally and/or alternatively include the gas tight barrier further comprises a sliding seal interface comprising a first external snap ring and a second external snap ring seated into an outer groove formed in the insert wall.

A further embodiment of any of the foregoing embodiments may additionally and/or alternatively include the sliding retort further comprising an upper specimen clevis in operative communication with the outer section proximate the first load rod orifice at an upper specimen clevis to outer section interface; and a lower specimen clevis in operative communication with the inner section proximate the second load rod orifice at a lower specimen clevis to inner section interface.

A further embodiment of any of the foregoing embodiments may additionally and/or alternatively include the sliding retort further comprising the upper specimen clevis to outer section interface comprising a groove in the upper specimen clevis configured to center the outer section on an axis of the load train.

A further embodiment of any of the foregoing embodiments may additionally and/or alternatively include the outer section is formed as a cylinder; and the inner section is formed as a complimentary cylinder configured to insert within the outer section.

A further embodiment of any of the foregoing embodiments may additionally and/or alternatively include the first load rod orifice and the second load rod orifice have a diameter larger than an outer diameter of a spanner nut and an outer diameter of a load rod support.

In accordance with the present disclosure, there is provided a sliding retort for a uniaxial test rig load train and furnace assembly comprising a test rig load actuator in operative communication with an upper load rod support; the upper load rod support in operative communication with an upper specimen clevis, the upper specimen clevis configured to support a specimen at a specimen upper end; a lower load rod support; the lower load rod support in operative communication with a lower specimen clevis, the lower specimen clevis configured to support the specimen at a specimen lower end; an outer section comprising a receiver wall forming an outer section receiver at a receiver end, the outer section includes a first load rod orifice at an upper load rod receiving end opposite the receiver end; an inner section comprising an insert wall forming an inner section insert at an insert end, the inner section includes a second load rod orifice at a lower load rod receiving end opposite the insert end, wherein the first load rod orifice is configured to receive the upper load rod support, the upper specimen clevis and the specimen, and the second load rod orifice is configured to receive the lower load rod support, the lower specimen clevis and the specimen; the outer section and the inner section overlap proximate the receiver end and the insert end, wherein the inner section insert fits into the outer section receiver so that the insert wall and the receiver wall overlap to form a gas tight barrier; a retort cavity formed within the compact sliding retort responsive to the outer section and the inner section being coupled, wherein the retort cavity is configured to surround the test specimen with a gas forming a predetermined non-standard atmosphere within the retort cavity, whereby the load train can move axially with the sliding retort and maintain the non-standard atmosphere; and the furnace in operative communication with the uniaxial test rig, the furnace surrounding the sliding retort.

Particular embodiments further may include at least one, or a plurality of, the following optional features, alone or in combination with each other:

A further embodiment of any of the foregoing embodiments may additionally and/or alternatively include the upper load rod support comprises an upper load rod support flow passage fluidly coupled with a clevis gas channel formed in the upper specimen clevis, the clevis gas channel is fluidly coupled with the retort cavity; and the lower load rod support comprises a lower load rod support flow passage fluidly coupled with another clevis gas channel formed in the lower specimen clevis, the another clevis gas channel is fluidly coupled with the retort cavity.

A further embodiment of any of the foregoing embodiments may additionally and/or alternatively include the sliding retort for a uniaxial test rig load train and furnace assembly further comprising a gas supply fluidly coupled with at least one of the upper load rod support flow passage and the lower load rod support flow passage.

A further embodiment of any of the foregoing embodiments may additionally and/or alternatively include the gas tight barrier further comprises a sliding seal interface comprising a first external snap ring and a second external snap ring seated into an outer groove formed in the insert wall.

A further embodiment of any of the foregoing embodiments may additionally and/or alternatively include the sliding retort for a uniaxial test rig load train and furnace assembly further comprising an upper spanner nut coupled with a split washer in operative communication with the first load rod orifice at an upper load rod receiving end; and a lower spanner nut coupled with another split washer in operative communication with the second load rod orifice at a lower load rod receiving end.

A further embodiment of any of the foregoing embodiments may additionally and/or alternatively include the first load rod orifice and the second load rod orifice have a diameter larger than an outer diameter of a spanner nut and an outer diameter of a load rod support.

In accordance with the present disclosure, there is provided a process for a sliding retort and a uniaxial test rig load train and furnace assembly comprising coupling a test rig load actuator in operative communication with an upper load rod support; coupling the upper load rod support in operative communication with an upper specimen clevis; configuring the upper specimen clevis to support a specimen at a specimen upper end; coupling a lower load rod support in operative communication with a lower specimen clevis; configuring the lower specimen clevis to support the specimen at a specimen lower end; forming an outer section comprising a receiver wall forming an outer section receiver at a receiver end; forming a first load rod orifice in the outer section at an upper load rod receiving end opposite the receiver end; forming an inner section comprising an insert wall forming an inner section insert at an insert end, the inner section includes a second load rod orifice at a lower load rod receiving end opposite the insert end; configuring the first load rod orifice to receive the upper load rod support, the upper specimen clevis and the specimen; configuring the second load rod orifice to receive the lower load rod support, the lower specimen clevis and the specimen; overlapping the outer section and the inner section proximate the receiver end and the insert end; fitting the inner section insert into the outer section receiver; forming a gas tight barrier by overlapping the insert wall and the receiver wall; forming a retort cavity within the compact sliding retort responsive to the outer section and the inner section being coupled; surrounding the test specimen with a gas; forming a predetermined non-standard atmosphere within the retort cavity; moving the load train axially with the sliding retort and maintaining the non-standard atmosphere; and coupling the furnace in operative communication with the uniaxial test rig; surrounding the sliding retort with the furnace.

Particular embodiments further may include at least one, or a plurality of, the following optional features, alone or in combination with each other:

A further embodiment of any of the foregoing embodiments may additionally and/or alternatively include the process further comprising coupling an upper spanner nut with a split washer in operative communication with the first load rod orifice at an upper load rod receiving end; and coupling a lower spanner nut with another split washer in operative communication with the second load rod orifice at a lower load rod receiving end.

A further embodiment of any of the foregoing embodiments may additionally and/or alternatively include the process further comprising forming an upper load rod support flow passage in the upper load rod support; fluidly coupling the upper load rod support flow passage with an upper specimen clevis gas channel formed in the upper specimen clevis; fluidly coupling the clevis gas channel with the retort cavity; forming a lower load rod support flow passage in the lower load rod support; fluidly coupling the lower load rod support flow passage with a lower specimen clevis gas channel formed in the lower specimen clevis; and fluidly coupling the lower specimen clevis gas channel with the retort cavity.

A further embodiment of any of the foregoing embodiments may additionally and/or alternatively include the process further comprising fluidly coupling a gas supply with at least one of the upper load rod support flow passage and the lower load rod support flow passage.

A further embodiment of any of the foregoing embodiments may additionally and/or alternatively include the gas tight barrier further comprises a sliding seal interface comprising a first external snap ring and a second external snap ring seated into an outer groove formed in the insert wall.

A further embodiment of any of the foregoing embodiments may additionally and/or alternatively include the first load rod orifice and the second load rod orifice have a diameter larger than an outer diameter of a spanner nut and an outer diameter of a load rod support.

A further embodiment of any of the foregoing embodiments may additionally and/or alternatively include the process further comprising forming the outer section as a cylinder; and forming the inner section as a complimentary cylinder configured to insert within the outer section.

Other details of the compact sliding retort are set forth in the following detailed description and the accompanying drawings wherein like reference numerals depict like elements.
Fig. 1 is a cross section schematic representation of an exemplary compact sliding retort for a clamshell furnace with a uniaxial test rig.
Fig. 2 is a close up schematic representation of the compact sliding retort for a clamshell furnace with a uniaxial test rig of Fig. 1.
Fig. 3 is a partial isometric view schematic representation of the compact sliding retort for a clamshell furnace with a uniaxial test rig of Fig. 1.
Fig. 4 is a schematic representation of an interior of the compact sliding retort for a clamshell furnace with a uniaxial test rig of Fig. 1.

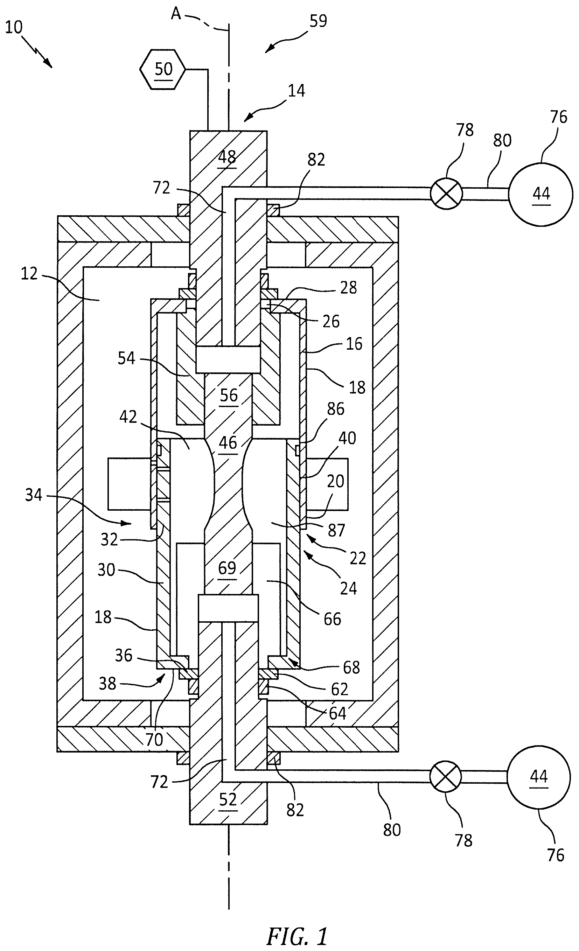

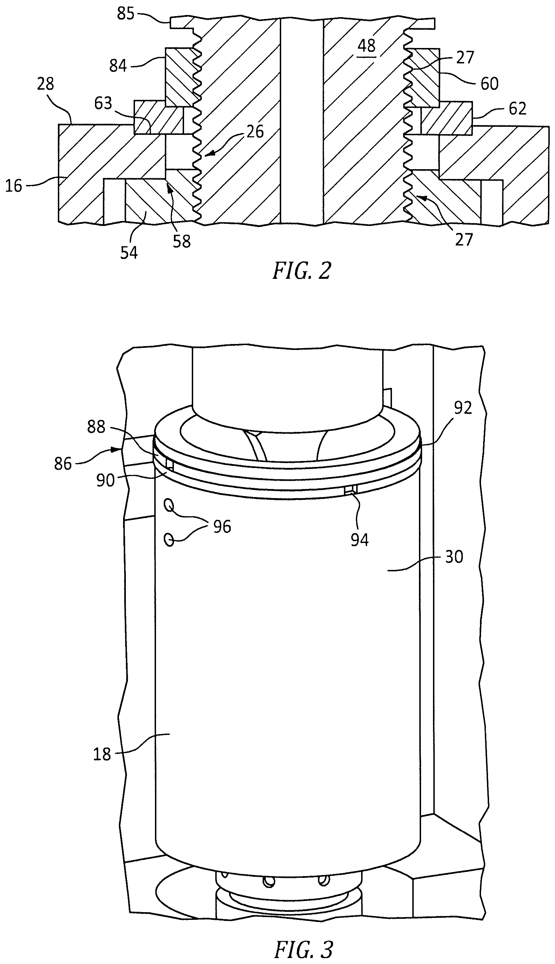

Referring now to Fig. 1 and Fig. 2, an exemplary compact sliding retort 10 is shown within a clamshell furnace 12 associated with a uniaxial test rig 14. The compact sliding retort 10 includes an outer section 16 slidably coupled with an inner section 18.

The outer section 16 is formed as a cylinder with a receiver wall 20 forming an outer section receiver 22 at a receiver end 24. The outer section 16 includes a first load rod orifice 26 shaped as a circular opening at an upper load rod receiving end 28 opposite the receiver end 24. The first load rod orifice 26 includes a threaded feature 27.

The inner section 18 is formed as a cylinder shaped with an insert wall 30 forming an inner section insert 32 at an insert end 34. The inner section 18 includes a second load rod orifice 36 shaped as a circular opening at a lower load rod receiving end 38 opposite the insert end 34. The second load rod orifice 36 includes threaded feature 27.

The outer section 16 and inner section 18 nest together and overlap proximate the receiver end 24 and the insert end 34. The inner section insert 32 fits into the outer section receiver 22 so that the insert wall 30 and the receiver wall 20 overlap to form a gas tight barrier 40.

A retort cavity 42 is formed within the compact sliding retort 10 when the outer section 16 and the inner section 18 are coupled as shown. The retort cavity 42 can contain a gas/fluid 44 used to provide an inert atmosphere surrounding a test specimen 46 within the retort cavity 42.

The uniaxial test rig 14 includes an upper load rod support 48 in operative communication with a load actuator 50. The load actuator 50 can be a hydraulic powered device that applies a predetermined load force on the upper load rod support 48 during testing of the test specimen 46 placing the test specimen 46 into tension/compression. The uniaxial test rig 14 includes a lower load rod support 52 opposite the upper load rod support 48. The upper load rod support 48 is configured to couple together with an upper specimen clevis 54 opposite the load actuator 50.

The upper specimen clevis 54 is configured to couple with the test specimen 46 at a specimen upper end 56. The upper specimen clevis 54 includes threads 27 employed to attach to the test specimen 46 threads 27 on the test specimen 46 proximate the specimen upper end 56. The upper specimen clevis 54 contacts the outer section 16 proximate the first load rod orifice 26 at an upper specimen clevis to outer section interface 58. The interface 58 can be formed as a groove in the upper specimen clevis 54 that functions to center the outer section 16 on an axis A of a load train 59.

An upper spanner nut 60 includes threads 27. The upper spanner nut 60 compresses against a washer 62 that contacts the upper section 16 proximate the upper load rod receiving end 28 in a groove 63, see Fig. 2. The washer 62 can be a split washer which allows for easy disassembly of the sliding retort 10. The upper spanner nut 60 and washer 62 can function to seal the upper load rod receiving end 28 and upper load rod support 48.

Similarly to the upper spanner nut 60 and washer 62, a lower spanner nut 64 and washer 62 can couple with the lower load rod support 52 and inner section 18 proximate a lower specimen clevis 66 at a lower specimen clevis to inner section interface 68. The lower specimen clevis 66 can be in operative communication with the specimen 46 at a specimen lower end 69. The lower spanner nut 64 and washer 62 can function to seal a lower load rod receiving end 70 formed in the inner section 18 and the lower load rod support 52.

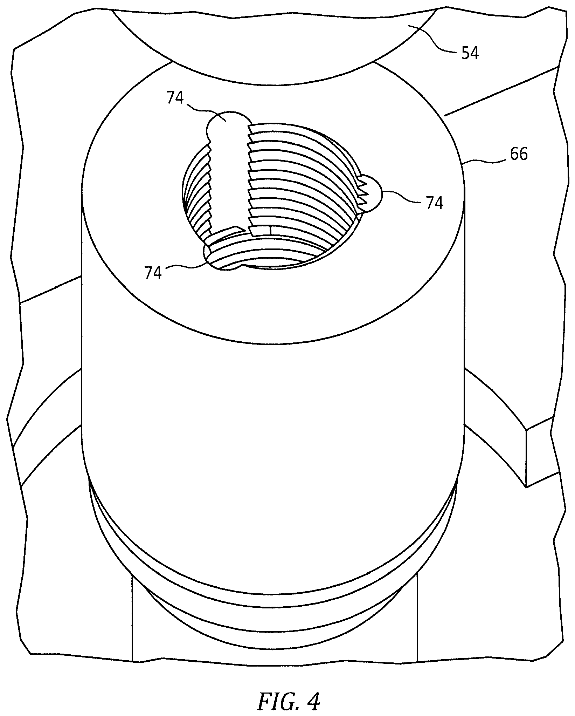

The gas/fluid 44 can be supplied to the retort cavity 42 through a flow passage 72 formed within the upper load rod support 52. The flow passage 72 can include a radially formed tube intersecting an axially aligned tube through the load rod support 48, 52. The flow passage 72 can be fluidly coupled with a clevis gas channel 74 as seen in Fig. 4. The clevis gas channel 74 is formed proximate the threads 27 axially and configured to pass the gas/fluid 44 proximate the threads 27 through the upper specimen clevis 54 from the flow passage 72 to the retort cavity 42. The clevis gas channel 74 is shown as a semi-circular cutout along the threads 27 of the specimen clevis 54, 66. The clevis gas channel 74 can also be formed in the lower specimen clevis 66 and pass the gas/fluid 44 from the flow passage 72 formed in the lower load rod support 52 through the lower specimen clevis 66 proximate the threads 27 and into the retort cavity 42. The gas/fluid 44 can be supplied from a gas supply 76 and include control valve 78 in a supply line 80 between the gas supply 76 and the flow passage 72. The gas/fluid 44 can flow from the supply 76 through the supply line 80 past the valve 78 into the flow passage 72 and continue through the clevis gas channel 74 and into the retort cavity 42 to form an inert atmosphere around the test specimen 46. As the gas/fluid 44 fills the retort cavity 42 the ambient atmosphere, such as air, is purged out of the retort cavity 42.

The compact sliding retort 10 fits inside the clamshell furnace 12. The clamshell furnace 12 can be supported by furnace supports 82 that accompany the test rig 14. The compact sliding retort 10 attaches to the load train 59 fixturing (load rod 48, 52; specimen clevis 54, 66, test specimen 46). The two piece design of the retort 10 with the outer section 16 attached to the inner section 18 are attached to the respective halves of the load train 59.

The split washer 62 and spanner nut 60, 64, allow for easy assembly/disassembly within the load train 59. The split washer 62 contacts the groove 63 on the respective outer section 16 and inner section 18. The split washer 62 can be compressed by the spanner nut 60, 64 ridding on the threads 27 of the load rods 48, 52. The spanner nut 60, 64 includes an outer diameter 84 that matches an outer diameter 85 of the load rod support 48, 52. Both the outer diameters 84, 85 are sized smaller than the first load rod orifice 26 and second load rod orifice 36.

The disassembly of the sliding retort 10 can be accomplished by loosening the spanner nuts 60, 64. Removing the split washers 62 from the groove 63. The outer section 16 can be slid along the axis A along the upper load rod support 48. The inner section 18 can be slid along the axis A along the lower load rod support 52. The test specimen 46 can be exposed. Both the upper specimen clevis 54 and the lower specimen clevis 66 can be exposed. The test specimen 46 can be removed/installed from/to each of the specimen clevis 46, 66. After reassembly, the spanner nut 60, 64 with split washers 62 provide mechanical sealing surfaces which prevent substantial leakage of gas/fluid 44 of a non-standard atmosphere 87 within the retort cavity 42.

Referring also to Fig. 3, the assembly of the outer section 16 with the inner section 18 creates the gas tight barrier 40 between the insert wall 30 and the receiver wall 20. The gas tight barrier 40 can include a sliding seal interface 86. The sliding seal interface 86 includes a first external snap ring 88 and a second external snap ring 90. The snap rings 88, 90 seat into an outer groove 92 formed in the insert wall 30. The first external snap ring 88 can include a gap/cutout portion 94 that is configured to accommodate assembly of the first external snap ring 88 into the outer groove 92. The second external snap ring 90 can include a gap/cutout portion 94 that is configured to accommodate assembly of the second external snap ring 90 into the outer groove 92. The gap/cutout portion 94 allows the external snap ring 88, 90 to be flexed and adjust to fit over the insert wall 30 to obtain a seat within the outer groove 92.

After installation of the two external snap rings 88, 90, the cutout portion 94 of each external snap ring 88, 90 can be offset by at least 90 degrees to ensure gas tight seal with at least one snap ring 88, 90 sealing the outer groove 92 and providing the circumferential seal along the sliding seal interface 86 between the outer section 16 and the inner section 18. The external snap rings 88, 90 when fully opened in the outer groove 92 provide a slip fit with the inner diameter of the receiver wall 20. The two halves 16, 18 slide over each other and maintain the gas tight barrier 40 while also allowing for the axial movement of the load train 59.

The inner section 18 can accommodate penetrations through the insert wall 30 for the insertion of thermocouples and the like through thermocouple access ports 96 as seen in Fig. 3.

There is an allowance for a small quantity of gas/fluid 44 to leak out of the retort cavity 42 in order to purge any air that may be trapped within the retort cavity 42. The allowance for leakage also maintains the proper gas/fluid 44 atmosphere within retort cavity 42 throughout the duration of the testing to maintain the predetermined non-standard environment.

It is contemplated that the inner section 18 can be sized such that the insert wall 30 can span along the length of the test specimen 46 to capture the inert gas 44 within the retort cavity 42.

A technical advantage of the disclosed compact sliding retort includes allowing for a large number of inert gas dynamic testing to be conducted on existing uniaxial test rigs with minimal time and cost.

Another technical advantage of the disclosed compact sliding retort includes the use of non-static setup for the retort furnace with smaller chambers.

Another technical advantage of the disclosed compact sliding retort includes both a compact retort as well as sliding to allow for dynamic testing to take place in a uniaxial test rig.

Another technical advantage of the disclosed compact sliding retort includes the ability to easily adapt the design to other test rigs of varying sizes and for different test conditions.

There has been provided a compact sliding retort. While the compact sliding retort has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A sliding retort comprising:
an outer section comprising a receiver wall forming an outer section receiver at a receiver end, the outer section includes a first load rod orifice at an upper load rod receiving end opposite the receiver end;
an inner section comprising an insert wall forming an inner section insert at an insert end, the inner section includes a second load rod orifice at a lower load rod receiving end opposite the insert end;
the outer section and the inner section overlap proximate the receiver end and the insert end, wherein the inner section insert fits into the outer section receiver so that the insert wall and the receiver wall overlap to form a gas tight barrier; and
a retort cavity formed within the compact sliding retort responsive to the outer section and the inner section being coupled, wherein the first load rod orifice and the second load rod orifice are configured to receive a load train of a uniaxial test rig and a test specimen coupled within the load train, whereby the load train can move axially with the sliding retort and maintain the non-standard atmosphere.

2. The sliding retort according to claim 1, further comprising:
an upper spanner nut coupled with a split washer in operative communication with the first load rod orifice at an upper load rod receiving end; and
a lower spanner nut coupled with another split washer in operative communication with the second load rod orifice at a lower load rod receiving end.

3. The sliding retort according to claim 1 or 2, wherein the gas tight barrier further comprises:
a sliding seal interface comprising a first external snap ring and a second external snap ring seated into an outer groove formed in the insert wall.

4. The sliding retort according to any of claims 1 to 3, further comprising:
an upper specimen clevis in operative communication with the outer section proximate the first load rod orifice at an upper specimen clevis to outer section interface; and
a lower specimen clevis in operative communication with the inner section proximate the second load rod orifice at a lower specimen clevis to inner section interface.

5. The sliding retort according to claim 4, further comprising:
the upper specimen clevis to outer section interface comprising a groove in the upper specimen clevis configured to center the outer section on an axis of the load train.

6. The sliding retort according to any of claims 1 to 5, wherein the outer section is formed as a cylinder; and
the inner section is formed as a complimentary cylinder configured to insert within the outer section.

7. The sliding retort according to any of claims 1 to 6, wherein the first load rod orifice and the second load rod orifice have a diameter larger than an outer diameter of a spanner nut and an outer diameter of a load rod support.

8. The sliding retort according to any of claims 1 to 7, wherein the sliding retort is configured for a uniaxial test rig load train and furnace assembly comprising:
a test rig load actuator in operative communication with an upper load rod support; the upper load rod support in operative communication with an upper specimen clevis, the upper specimen clevis configured to support a specimen at a specimen upper end; and
a lower load rod support; the lower load rod support in operative communication with a lower specimen clevis, the lower specimen clevis configured to support the specimen at a specimen lower end;
wherein the first load rod orifice is configured to receive the upper load rod support, the upper specimen clevis and the specimen, and the second load rod orifice is configured to receive the lower load rod support, the lower specimen clevis and the specimen;
wherein the retort cavity is configured to surround the test specimen with a gas forming a predetermined non-standard atmosphere within the retort cavity, whereby the load train can move axially with the sliding retort and maintain the non-standard atmosphere; and
the furnace in operative communication with the uniaxial test rig, the furnace surrounding the sliding retort.

9. The sliding retort for a uniaxial test rig load train and furnace assembly according to claim 8, wherein the upper load rod support comprises an upper load rod support flow passage fluidly coupled with a clevis gas channel formed in the upper specimen clevis, the clevis gas channel is fluidly coupled with the retort cavity; and the lower load rod support comprises a lower load rod support flow passage fluidly coupled with another clevis gas channel formed in the lower specimen clevis, the another clevis gas channel is fluidly coupled with the retort cavity.

10. The sliding retort for a uniaxial test rig load train and furnace assembly according to claim 9, further comprising:
a gas supply fluidly coupled with at least one of the upper load rod support flow passage and the lower load rod support flow passage.

11. The sliding retort for a uniaxial test rig load train and furnace assembly according to any of claims 8 to 10, further comprising:
an upper spanner nut coupled with a split washer in operative communication with the first load rod orifice at an upper load rod receiving end; and
a lower spanner nut coupled with another split washer in operative communication with the second load rod orifice at a lower load rod receiving end.

12. A process for a sliding retort and a uniaxial test rig load train and furnace assembly comprising:
coupling a test rig load actuator in operative communication with an upper load rod support;
coupling the upper load rod support in operative communication with an upper specimen clevis;
configuring the upper specimen clevis to support a specimen at a specimen upper end;
coupling a lower load rod support in operative communication with a lower specimen clevis;
configuring the lower specimen clevis to support the specimen at a specimen lower end;
forming an outer section comprising a receiver wall forming an outer section receiver at a receiver end;
forming a first load rod orifice in the outer section at an upper load rod receiving end opposite the receiver end;
forming an inner section comprising an insert wall forming an inner section insert at an insert end, the inner section includes a second load rod orifice at a lower load rod receiving end opposite the insert end;
configuring the first load rod orifice to receive the upper load rod support, the upper specimen clevis and the specimen;
configuring the second load rod orifice to receive the lower load rod support, the lower specimen clevis and the specimen;
overlapping the outer section and the inner section proximate the receiver end and the insert end;
fitting the inner section insert into the outer section receiver; forming a gas tight barrier by overlapping the insert wall and the receiver wall;
forming a retort cavity within the compact sliding retort responsive to the outer section and the inner section being coupled;
surrounding the test specimen with a gas;
forming a predetermined non-standard atmosphere within the retort cavity;
moving the load train axially with the sliding retort and maintaining the non-standard atmosphere; and
coupling the furnace in operative communication with the uniaxial test rig; surrounding the sliding retort with the furnace.

13. The process of claim 12, further comprising:
coupling an upper spanner nut with a split washer in operative communication with the first load rod orifice at an upper load rod receiving end; and
coupling a lower spanner nut with another split washer in operative communication with the second load rod orifice at a lower load rod receiving end.

14. The process of claim 12 or 13, further comprising:
forming an upper load rod support flow passage in the upper load rod support;
fluidly coupling the upper load rod support flow passage with an upper specimen clevis gas channel formed in the upper specimen clevis;
fluidly coupling the clevis gas channel with the retort cavity;
forming a lower load rod support flow passage in the lower load rod support;
fluidly coupling the lower load rod support flow passage with a lower specimen clevis gas channel formed in the lower specimen clevis; and
fluidly coupling the lower specimen clevis gas channel with the retort cavity; and/or
further comprising:
fluidly coupling a gas supply with at least one of the upper load rod support flow passage and the lower load rod support flow passage.

15. The process of any of claims 12 to 14, wherein the gas tight barrier further comprises:
a sliding seal interface comprising a first external snap ring and a second external snap ring seated into an outer groove formed in the insert wall, and/or
wherein the first load rod orifice and the second load rod orifice have a diameter larger than an outer diameter of a spanner nut and an outer diameter of a load rod support; and/or
further comprising:
forming the outer section as a cylinder; and
forming the inner section as a complimentary cylinder configured to insert within the outer section.
